# FASCICULE DE BREVET EUROPEEN

(11) **EP 4 448 931 B1**
(45) Date de publication et mention de la délivrance du brevet: **10.09.2025**
(21) Numéro de dépôt: 22840260.8
(22) Date de dépôt: 12.12.2022
(51) Int. Cl.: F01D 5/02, F01D 15/10, F02C 7/36

(54) **TURBOMACHINE POUR AERONEF COMPRENANT UNE MACHINE ELECTRIQUE**
FLUGZEUGTURBOMASCHINE MIT EINER ELEKTRISCHEN MASCHINE
AIRCRAFT TURBOMACHINE COMPRISING AN ELECTRIC MACHINE

(30) Priorité: 13.12.2021 FR 2113361
(43) Date de publication de la demande: 23.10.2024
(73) Titulaire: SAFRAN AIRCRAFT ENGINES, 75015 Paris (FR)
(72) Inventeur: TAILLANT, Jean-Claude Christian, 77550 MOISSY-CRAMAYEL (FR); BARET, Emmanuel Fabrice Marie, 77550 MOISSY-CRAMAYEL (FR); BECOULET, Julien Fabien Patrick, 77550 MOISSY-CRAMAYEL (FR); REIGNER, Pierre-Alain Jean Philippe, 77550 MOISSY-CRAMAYEL (FR); BOUDEBIZA, Tewfik, 77550 MOISSY-CRAMAYEL (FR)
(74) Mandataire: Brevalex
(86) Numéro de dépôt international: PCT/FR2022/052309
(87) Numéro de publication internationale: WO 2023/111433

(56) Documents cités:
- EP-A1- 3 467 331
- US-A1- 2010 283 341
- US-A1- 2013 014 513
- US-A1- 2021 172 382

## Description

### DOMAINE TECHNIQUE

L'invention concerne une turbomachine pour aéronef comprenant une machine électrique.

### ÉTAT DE LA TECHNIQUE ANTÉRIEURE

Il est connu d'équiper des turbomachines d'aéronef d'une génératrice électrique. Cette génératrice électrique prélève de la puissance mécanique à un corps haute pression de la turbomachine, par l'intermédiaire d'un boîtier de transmission, aussi appelé « AGB » pour « Accessory Gear Box » en anglais, pour la transmettre à des accessoires, tels qu'une pompe à huile ou une pompe à carburant.

Afin de suppléer cette génératrice électrique, la demande déposée sous le numéro FR2106935 au nom de la Demanderesse prévoit par exemple d'installer une machine électrique à une extrémité arrière de la turbomachine. Cette machine électrique est prévue pour prélever et/ou transmettre de la puissance mécanique, via son rotor, à une extrémité arrière d'un arbre de turbine de la turbomachine, notamment à une extrémité arrière d'un arbre basse pression en cas de turbomachine à double corps.

Une telle installation pose toutefois quelques difficultés pour sa mise en œuvre. S'agissant de l'accouplement et de la transmission des efforts entre l'arbre de turbine et la machine électrique, il peut y avoir un désaxage entre l'arbre de turbine et le rotor de la machine électrique. L'arbre de turbine peut encore se déplacer en fonctionnement, notamment du fait de sa dynamique ou encore de sa dilatation thermique. D'un point de vue sécurité, il peut en outre être nécessaire de désaccoupler le rotor de la machine électrique de l'arbre de turbine qui l'entraîne, en cas de court-circuit, notamment si la machine électrique est à aimants permanents.

Les documents US 2021/0172382 A1, EP 3 467 331 A1 et US 2010/0283341 A1 décrivent encore d'autres applications des génératrices électriques dans les turbomachines.

### EXPOSÉ DE L'INVENTION

La présente invention vise à pallier ces différentes difficultés.

A cet effet, l'invention a pour objet une turbomachine pour aéronef s'étendant suivant un axe longitudinal et comprenant les caractéristiques de la revendication 1.

Selon des variantes de réalisation qui peuvent être prises ensemble ou séparément :
- les organes d'accouplement sont des crabots ;
- l'extrémité arrière de l'arbre de turbine porte l'un des organes d'accouplement par l'intermédiaire d'un support annulaire comprenant, successivement suivant la direction axiale, une première partie montée solidaire en rotation avec l'arbre de turbine, une deuxième partie portant ledit organe d'accouplement et une troisième partie souple reliant la première partie à la deuxième partie et étant apte à autoriser un déplacement de la première partie par rapport à la deuxième partie suivant les directions axiale et radiale ;
- le chariot d'accouplement comprend une partie de chariot par l'intermédiaire de laquelle le chariot d'accouplement est monté solidaire en rotation autour de l'axe de machine électrique et libre en translation suivant la direction axiale avec le rotor de machine électrique, une partie d'accouplement portant l'autre des organes d'accouplement et une partie de liaison reliant la partie de chariot à la partie d'accouplement et comprenant une première portion qui s'étend axialement dans le prolongement de la partie d'accouplement vers la partie de chariot et qui forme une bride tronconique ;
- la turbomachine comprend une enceinte lubrifiée dans laquelle sont logés des paliers supportant le rotor de machine électrique et des premières cannelures ménagées en correspondance dans le chariot d'accouplement et dans le rotor de machine électrique pour l'entraînement en rotation du chariot d'accouplement par le rotor de machine électrique et/ou l'inverse et pour le guidage en translation axiale du chariot d'accouplement par rapport au rotor de machine électrique, et un circuit de lubrification comprenant un injecteur conçu pour injecter de l'huile dans l'enceinte lubrifiée ;
- la turbomachine comprend des organes de verrouillage, l'un porté par le rotor de machine électrique, l'autre porté par le chariot d'accouplement, les organes de verrouillage étant conçus pour s'engager l'un avec l'autre à l'issue du déplacement en translation du chariot d'accouplement par rapport au rotor de machine électrique depuis la position accouplée jusqu'à la position désaccouplée et pour bloquer le déplacement en translation du chariot d'accouplement par rapport au rotor de machine électrique depuis la position désaccouplée vers la position accouplée, lorsque le chariot d'accouplement occupe la position désaccouplée ;
- la partie mobile de l'actionneur est conçue pour se déplacer en translation par rapport à la partie fixe depuis la deuxième position engagée vers une deuxième position désengagée dans laquelle la partie mobile et le chariot d'accouplement sont libres en mouvement l'un par rapport à l'autre, lorsque le chariot d'accouplement est bloqué en position désaccouplée par les organes de verrouillage.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
[Fig.1] est une vue en coupe longitudinale, partielle, d'une turbomachine pour aéronef selon un mode de réalisation de l'invention, un chariot d'accouplement de la turbomachine occupant une position accouplée ;
[Fig.2] est une vue en coupe longitudinale, schématique et partielle, de la turbomachine illustrée à la figure 1, le chariot d'accouplement occupant la position accouplée ;
[Fig.3] est une vue en coupe longitudinale, schématique et partielle, de la turbomachine illustrée aux figures 1 et 2, le chariot d'accouplement occupant une position désaccouplée ;
[Fig.4] est une vue en coupe longitudinale, partielle, d'une enceinte lubrifiée de la turbomachine illustrée aux figures 1 à 3, le chariot d'accouplement occupant une position intermédiaire entre la position accouplée et la position désaccouplée.

### DESCRIPTION DETAILLEE

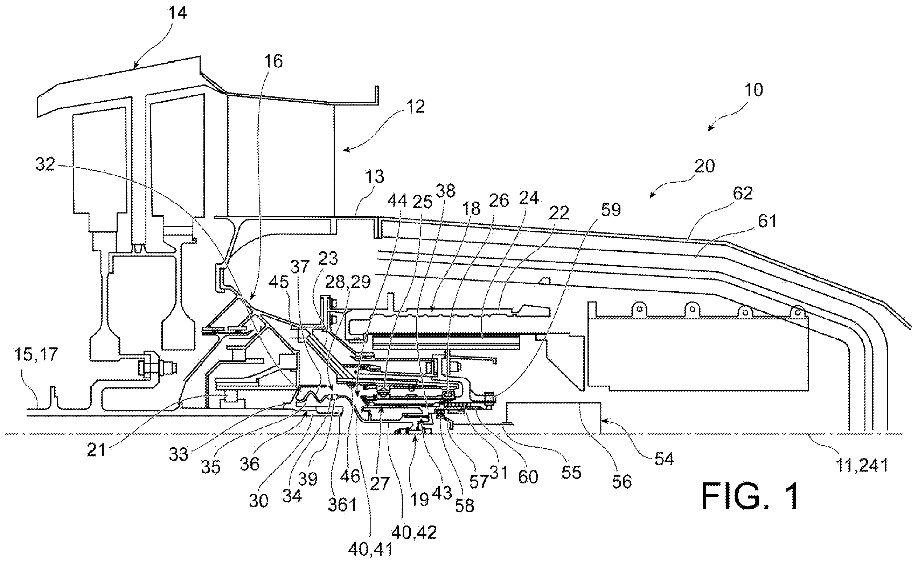

Les figures 1 à 4 montrent une turbomachine 10 pour aéronef selon un mode de réalisation de l'invention. La turbomachine 10 est par exemple un turboréacteur, notamment à double corps. Ce turboréacteur peut être à simple ou double flux. En variantes (non représentées), la turbomachine 10 est un turbopropulseur ou une turbomachine du type dénommé « à soufflante(s) non carénée(s) ».

A titre préliminaire, il est défini une direction axiale, une direction radiale qui est orthogonale à la direction axiale et une direction circonférentielle qui est orthogonale aux directions axiale et radiale.

La turbomachine 10 s'étend suivant un axe longitudinal 11 de direction axiale et comprend, d'amont en aval dans le sens d'écoulement des gaz, des compresseurs (non représentés), une chambre de combustion (non représentée), des turbines et une tuyère d'échappement 12 comprenant un carter d'échappement 13 fixe, aussi appelé carter « TRF » pour « Turbine Rear Frame » en anglais. Lorsque la turbomachine 10 est un turboréacteur à double corps, elle comprend, d'une part, un compresseur basse pression et une turbine basse pression 14 formant un corps basse pression et reliés l'un à l'autre par un arbre basse pression 15 centré sur l'axe longitudinal 11, et d'autre part, un compresseur haute pression et une turbine haute pression (non représentés) formant un corps haute pression et reliés l'un à l'autre par un arbre haute pression (non représenté) centré sur l'axe longitudinal 11 et agencé autour de l'arbre basse pression 15.

La turbomachine 10 comprend en outre un stator 16 fixe, un arbre de turbine 17, une machine électrique 18 et un chariot d'accouplement 19.

Le stator 16 est par exemple formé par le carter d'échappement 13.

L'arbre de turbine 17 s'étend suivant l'axe longitudinal 11 jusqu'à une extrémité arrière 20 ou aval de la turbomachine 10. L'arbre de turbine 17 est apte à tourner autour de l'axe longitudinal 11 par rapport au stator 16 de la turbomachine 10. Pour cela, l'arbre de turbine 17 est notamment guidé en rotation par un palier arrière 21 ou aval supporté par le stator 16 de la turbomachine 10 entourant l'arbre de turbine 17. L'arbre de turbine 17 est par exemple formé par l'arbre basse pression 15.

La machine électrique 18 est agencée en arrière ou aval de l'arbre de turbine 17. Elle comprend un stator de machine électrique 22 fixé au stator 16 de la turbomachine 10, notamment via un carter 23 de la machine électrique 18, et un rotor de machine électrique 24 coaxial avec le stator de machine électrique 22 autour d'un axe de machine électrique 241 de direction axiale. Le rotor de machine électrique 24 peut être entouré par ou entourer le stator de machine électrique 22. Le rotor de machine électrique 24 est en outre apte à tourner par rapport au stator de machine électrique 22 autour de l'axe de machine électrique 241. Pour cela, le rotor de machine électrique 24 est notamment guidé en rotation par des paliers 25, 26, par exemple un palier avant 25 ou amont et un palier arrière 26 ou aval, supportés par le stator 16 de la turbomachine 10, notamment via le carter 23 de la machine électrique 18. S'il est prévu que l'axe longitudinal 11 et l'axe de machine électrique 241 soient confondus, il peut toutefois exister un léger désaxage entre ces deux axes, qui peut être le résultat des contraintes de fabrication de la turbomachine 10 ou d'un déplacement de l'arbre de turbine 17 en fonctionnement. Le rotor de machine électrique 24 est par exemple monté solidaire en translation axiale avec le stator 16 de la turbomachine 10, notamment via l'un des paliers 25, 26 monté sur le carter 23 de la machine électrique 18 et bloqué en translation par rapport à ce dernier. La machine électrique 18 peut produire de l'électricité et donc fonctionner en générateur, ou être réversible et fonctionner à la fois en générateur et en démarreur. La machine électrique 18 est par exemple à aimants permanents.

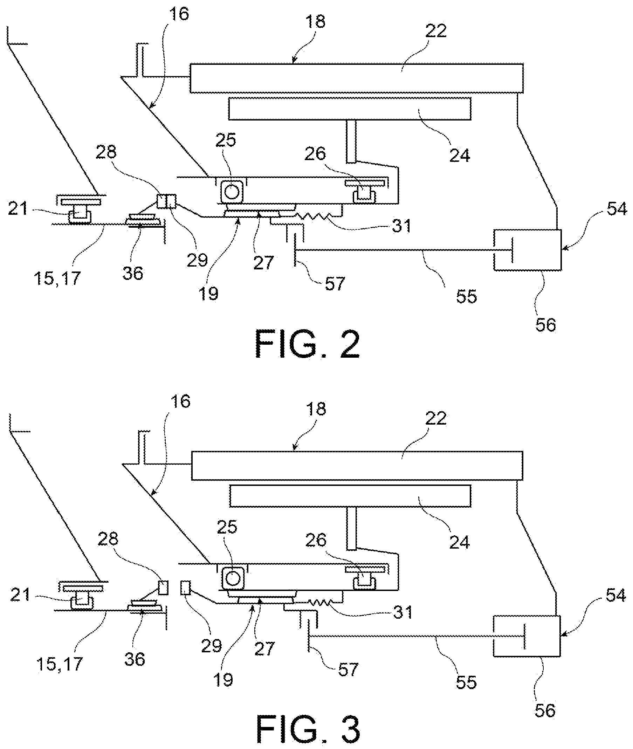

Le chariot d'accouplement 19 est monté solidaire en rotation avec le rotor de machine électrique 24 autour de l'axe de machine électrique 241 et est apte à se déplacer en translation par rapport au rotor de machine électrique 24 suivant la direction axiale entre une position accouplée (figures 1 et 2) et une position désaccouplée (figure 3). Dans la position désaccouplée, le chariot d'accouplement 19 est par exemple situé plus en arrière ou aval qu'en position accouplée. Pour cela, des premières cannelures 27 sont par exemple ménagées en correspondance dans le chariot d'accouplement 19 et dans le rotor de machine électrique 24 et sont engrenées pour l'entraînement en rotation du chariot d'accouplement 19 par le rotor de machine électrique 24 et/ou l'inverse et pour le guidage en translation axiale du chariot d'accouplement 19 par rapport au rotor de machine électrique 24.

La turbomachine 10 comprend encore des organes d'accouplement 28, 29, l'un 28 porté par une extrémité arrière 30 ou aval de l'arbre de turbine 17, l'autre 29 porté par le chariot d'accouplement 19. Les organes d'accouplement 28, 29 sont conçus pour s'engager l'un avec l'autre à l'issue du déplacement du chariot d'accouplement 19 depuis la position désaccouplée jusqu'à la position accouplée. Les organes d'accouplement 28, 29 s'engagent ainsi l'un avec l'autre lorsque le chariot d'accouplement 19 se déplaçant depuis la position désaccouplée vers la position accouplée, atteint la position accouplée. Les organes d'accouplement 28, 29 sont en outre conçus pour transmettre une puissance mécanique ou encore un couple de l'arbre de turbine 17 au rotor de machine électrique 24 et/ou du rotor de machine électrique 24 à l'arbre de turbine 17, lorsque les organes d'accouplement 28, 29 sont engagés l'un avec l'autre, le chariot d'accouplement 19 occupant la position accouplée. Autrement dit, lorsque le chariot d'accouplement 19 occupe la position accouplée, l'un des arbre de turbine 17 et rotor de machine électrique 24 entraîne l'autre des arbre de turbine 17 et rotor de machine électrique 24 autour de l'axe longitudinal 11 ou de l'axe de machine électrique 241.

Selon l'invention, la turbomachine 10 comprend en outre un organe de rappel élastique 31, tel qu'un ressort, monté entre le chariot d'accouplement 19 et le rotor de machine électrique 24 et conçu pour rappeler élastiquement le chariot d'accouplement 19 en translation suivant la direction axiale vers la position accouplée.

De cette manière, en cas de déplacement axial de l'arbre de turbine 17 par rapport au stator 16, le chariot d'accouplement 19 est capable d'adapter sa position axiale pour maintenir l'accouplement de l'arbre de turbine 17 et du rotor de machine électrique 24 via les organes d'accouplement 28, 29. En d'autres termes, l'organe de rappel élastique 31 force l'engagement des organes d'accouplement 28, 29. Cela permet d'éviter un désaccouplement intempestif de l'arbre de turbine 17 et du rotor de machine électrique 24, qui aurait pour conséquence un arrêt de la transmission de puissance mécanique de l'un à l'autre des arbre de turbine 17 et rotor de machine électrique 24 et donc un arrêt de fonctionnement de la machine électrique 18. Cela permet aussi de limiter les efforts axiaux qui transitent entre l'arbre de turbine 17 et le rotor de machine électrique 24 via le chariot d'accouplement 19. Un tel déplacement axial de l'arbre de turbine 17 intervient par exemple en fonctionnement lorsque le stator 16 et l'arbre de turbine 17 s'allongent suivant la direction axiale et que le stator 16 s'allonge plus que l'arbre de turbine 17, créant de ce fait un décalage axial entre le stator 16 et l'arbre de turbine 17 (phénomène de chariotage).

Les organes d'accouplement 28, 29 sont par exemple des crabots.

L'extrémité arrière 30 de l'arbre de turbine 17 porte par exemple l'un 28 des organes d'accouplement 28, 29 par l'intermédiaire d'un support 32 annulaire comprenant, successivement suivant la direction axiale, une première partie 33 entourant l'extrémité arrière 30 de l'arbre de turbine 17 et montée solidaire en rotation avec l'arbre de turbine 17 autour de l'axe longitudinal 11, une deuxième partie 34 portant ledit organe d'accouplement 28 et une troisième partie 35 reliant la première partie 33 à la deuxième partie 34. Des deuxièmes cannelures 36 sont par exemple ménagées en correspondance dans la première partie 33 du support 32 et dans l'extrémité arrière 30 de l'arbre de turbine 17 et sont engrenées pour l'entraînement en rotation du support 32 par l'extrémité arrière 30 de l'arbre de turbine 17 et/ou l'inverse. Les première, deuxième et troisième parties 33, 34, 35 du support 32 sont par exemple formées d'un seul tenant. Le support 32 est par exemple bloqué en translation axiale vers l'arrière ou aval par rapport à l'arbre de turbine 17, par l'intermédiaire d'un écrou 361 monté sur l'extrémité arrière 30 de l'arbre de turbine 17, en arrière ou aval dudit support 32.

La troisième partie 35 du support 32 est par exemple souple et apte à autoriser un déplacement de la première partie 33 par rapport à la deuxième partie 34 du support 32 suivant les directions axiale et radiale. Cela permet de conférer une souplesse en déplacement suivant les directions axiale et radiale à la deuxième partie 34 du support 32, et donc audit organe d'accouplement 28, par rapport l'arbre de turbine 17, et donc à la turbomachine 10 de s'adapter à un éventuel désaxage entre l'arbre de turbine 17 et le rotor de machine électrique 24. Pour cela, la troisième partie 35 du support 32 comprend par exemple un ou plusieurs plis 37 ou vagues suivant la direction axiale de manière à conférer une souplesse en déplacement suivant les directions axiale et radiale à la deuxième partie 34 du support 32, et donc audit organe d'accouplement 28, par rapport l'arbre de turbine 17. La troisième partie 35 du support 32 peut en complément ou en variante être amincie.

Le chariot d'accouplement 19 comprend par exemple une partie de chariot 38 par l'intermédiaire de laquelle le chariot d'accouplement 19 est monté solidaire en rotation autour de l'axe de machine électrique 241 et libre en translation suivant la direction axiale avec le rotor de machine électrique 24, notamment via les premières cannelures 27, une partie d'accouplement 39 portant l'autre 29 des organes d'accouplement 28, 29 et une partie de liaison 40 reliant la partie de chariot 38 à la partie d'accouplement 39. L'organe de rappel élastique 31 peut en outre être monté entre la partie de chariot 38 du chariot d'accouplement 19 et le rotor de machine électrique 24.

La partie de liaison 40 du chariot d'accouplement 19 peut en outre comprendre une première portion 41 s'étendant axialement dans le prolongement de la partie d'accouplement 39 vers la partie de chariot 38 et formant une paroi ou bride tronconique, notamment mince. La première portion 41 converge par exemple vers l'arrière ou aval depuis la partie d'accouplement 39. La première portion 41 de la partie de liaison 40 permet non seulement d'écarter axialement la partie de chariot 38 et la partie d'accouplement 39, mais aussi de les écarter radialement de manière de limiter la transmission d'efforts radiaux parasites via les organes d'accouplement 28, 29. Cela permet ainsi à la turbomachine 10 de s'adapter à un éventuel désaxage entre l'arbre de turbine 17 et le rotor de machine électrique 24.

La partie de liaison 40 peut aussi comprendre une deuxième portion 42 qui s'étend axialement dans le prolongement de la première portion 41, radialement en regard de la partie de chariot 38, et qui est montée solidaire avec la partie de chariot 38. La partie d'accouplement 39 et la partie de liaison 40 sont par exemple formées d'un seul tenant. Des troisièmes cannelures 43, bloquées en translation axiale par rapport à la partie d'accouplement 39 et à la partie de liaison 40, par exemple par des rondelles (non référencées), peuvent encore être ménagées en correspondance dans la partie de chariot 38 et dans la deuxième portion 42 de la partie de liaison 40 et engrenées pour le montage solidaire de la partie de chariot 38 et dans la deuxième portion 42 de la partie de liaison 40. Les troisièmes cannelures 43 peuvent être remplacées par des crabots ou des Curvic Couplings^{®} bloqués en translation axiale par des moyens appropriés.

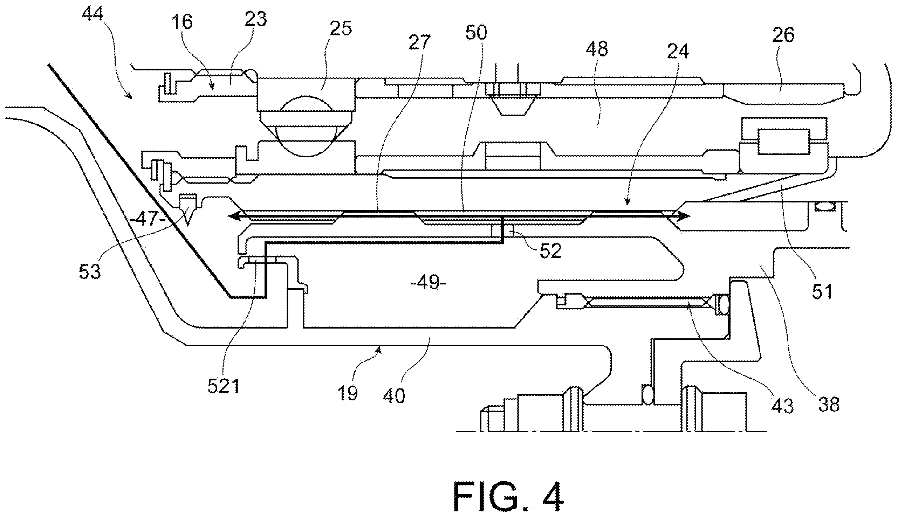

La turbomachine 10 comprend en outre une enceinte lubrifiée 44 (figure 4) dans laquelle les paliers 25, 26 supportant le rotor de machine électrique 24 et les premières cannelures 27 sont logés et un circuit de lubrification 45 comprenant un injecteur 46 ou buse conçu pour injecter de l'huile dans l'enceinte lubrifiée 44 afin d'assurer la lubrification des paliers 25, 26 et des premières cannelures 27. L'injecteur 46 est par exemple porté par le carter 23 de la machine électrique 18 et alimenté en huile par un canal (non référencé) du circuit de lubrification 45 ménagé dans ledit carter 23. L'enceinte lubrifiée 44 comprend :
- un premier espace annulaire 47 accueillant l'injecteur 46,
- un deuxième espace annulaire 48 dans lequel les paliers 25, 26 supportant le rotor de machine électrique 24 sont logés, le deuxième espace annulaire 48 étant décalé axialement par rapport au premier espace annulaire 47, par exemple vers l'arrière ou aval, et communiquant avec le premier espace annulaire 47,
- un troisième espace annulaire 49 entourée par ou entourant le deuxième espace annulaire 48 et ménagée au sein du chariot d'accouplement 19, notamment entre la deuxième portion 42 de la partie de liaison 40 et la partie de chariot 38, le troisième espace annulaire 49 communiquant avec le premier espace annulaire 47,
- un quatrième espace annulaire 50 dans lequel les premières cannelures 27 sont logées, le quatrième espace annulaire 50 étant radialement interposé entre les deuxième et troisième espaces annulaires 48, 49 et communiquant, d'une part, avec le deuxième espace annulaire 48 via un premier canal 51, et d'autre part, avec le troisième espace annulaire 49 via un deuxième canal 52.

De cette manière, l'huile injectée par l'injecteur 46 dans le premier espace annulaire 47 s'écoule par effet centrifuge successivement à travers le troisième ou deuxième, le quatrième et le deuxième ou troisième espaces annulaires 49, 50, 48 afin d'assurer la lubrification des paliers 25, 26 supportant le rotor de machine électrique 24 et des premières cannelures 27.

L'injecteur 46 peut en outre être conçu pour injecter de l'huile vers celui des deuxième et troisième espaces annulaires 48, 49 qui est entouré par l'autre des deuxième et troisième espaces annulaires 48, 49, notamment vers un canal ou une ouverture 521 par l'intermédiaire duquel celui des deuxième et troisième espaces annulaires 48, 49 communique avec le premier espace annulaire 47, de manière à favoriser l'écoulement d'huile par effet centrifuge à travers les deuxième, troisième et quatrième espaces annulaires 48, 49, 50.

Le premier canal 51 est par exemple incliné par rapport aux directions axiale et radiale. Il peut déboucher au niveau du palier arrière 26 supportant le rotor de machine électrique 24. Le deuxième canal 52 est par exemple orienté radialement, de manière à favoriser l'écoulement de l'huile par effet centrifuge entre les troisième et quatrième espaces annulaires 49, 50. L'ouverture 521 est par exemple orientée radialement, l'huile s'écoulant à travers l'ouverture 521 depuis le premier espace annulaire 47 vers le deuxième ou troisième espace annulaire 48, 49, depuis l'intérieur vers l'extérieur, de manière à favoriser l'écoulement de l'huile par effet centrifuge entre le premier espace annulaire 47 et le deuxième ou troisième espace annulaire 48, 49.

Le rotor de machine électrique 24 peut encore porter un organe d'étanchéité 53 (figure 4), tel qu'un joint à lèvre, agencé entre le premier et le quatrième espace annulaire 47, 50, par exemple à l'avant ou amont du quatrième espace annulaire 50, lorsque le chariot d'accouplement 19 occupe la position accouplée. L'organe d'étanchéité 53 permet de former une baignoire d'huile au niveau du quatrième espace annulaire 50 et donc de s'assurer d'un niveau d'huile suffisant pour la lubrification des premières cannelures 27. La turbomachine 10 comprend par exemple aussi un actionneur 54 conçu pour entraîner le chariot d'accouplement 19, notamment la partie de chariot 38, en translation depuis la position accouplée vers la position désaccouplée, ainsi qu'une unité de commande (non représentée) électronique conçue pour commander l'actionneur 54 d'entraîner le chariot d'accouplement 19 en translation depuis la position accouplée vers la position désaccouplée. Lorsqu'il déplace le chariot d'accouplement 19 vers la position désaccouplée, l'actionneur 54 vient ainsi contraindre l'organe de rappel élastique 31, qui tend au contraire à déplacer le chariot d'accouplement 19 vers la position accouplée.

L'unité de commande est par exemple conçue pour recevoir des instructions d'un pilote de l'aéronef, notamment par l'intermédiaire d'une interface utilisateur installée dans le cockpit de l'aéronef, et/ou des données représentatives d'une panne de la machine électrique 18 et/ou d'un circuit électrique auquel la machine électrique 18 est reliée. L'actionneur 54 permet ainsi de désaccoupler le rotor de machine électrique 24 de l'arbre de turbine 17, notamment en cas de panne telle qu'un court-circuit ou encore lors d'un test de déconnexion, ce qui rend la mise en œuvre de la machine électrique 18 plus sûre. Pour cela, l'actionneur 54 comprend notamment une partie mobile 55 et une partie fixe 56 par rapport à laquelle la partie mobile 55 se déplace en translation suivant la direction axiale. La partie fixe 56 est par exemple fixé au stator 16 de la turbomachine 10 ou au stator de machine électrique 22. La partie mobile 55 est conçue pour entraîner le chariot d'accouplement 19, notamment la partie de chariot 38, en translation depuis la position accouplée vers la position désaccouplée, lorsque la partie mobile 55 se déplace elle-même en translation depuis une première position engagée vers une deuxième position engagée.

La partie mobile 55 est en outre conçue pour se déplacer en translation par rapport à la partie fixe 56 depuis une première position désengagée dans laquelle la partie mobile 55 et le chariot d'accouplement 19 sont libres en mouvement l'un par rapport à l'autre, vers la première position engagée, lorsque le chariot d'accouplement 19 occupe la position accouplée. La partie mobile 55 se déplace depuis la première position désengagée vers la première position engagée, puis depuis la première position engagée vers la deuxième position engagée, dans un même sens de translation, par exemple vers l'arrière ou aval. La partie mobile 55 peut être fixe en rotation par rapport à la partie fixe 56. De cette manière, lorsque le chariot d'accouplement 19 occupe la position accouplée et que l'unité de commande ne commande pas l'actionneur 54 d'entraîner le chariot d'accouplement 19 vers la position désaccouplée, la partie mobile 55 de l'actionneur 54 ne contraint pas l'organe de rappel élastique 31, qui peut ainsi rappeler élastiquement le chariot d'accouplement 19 vers la position accouplée et maintenir l'engagement des organes d'accouplement 28, 29. En revanche, lorsque l'unité de commande commande l'actionneur 54 d'entraîner le chariot d'accouplement 19 vers la position désaccouplée, la partie mobile 55 se déplace depuis la première position désengagée vers la première position engagée où la partie mobile 55 s'engage avec le chariot d'accouplement 19, puis de la première position engagée vers la deuxième position engagée, la partie mobile 55 entraînant alors en translation le chariot d'accouplement 19 vers la position désaccouplée.

Pour cela, la partie mobile 55 comprend par exemple une bride d'actionnement 57 s'étendant autour de l'axe longitudinal 11 et conçue pour venir en butée axiale contre le chariot d'accouplement 19, notamment contre la partie de chariot 38, à l'issue du déplacement de la partie mobile 55 depuis la première position désengagée jusqu'à la première position engagée, et pour maintenir la butée axiale contre le chariot d'accouplement 19, lorsque la partie mobile 55 se déplace depuis la première position engagée jusqu'à la deuxième position engagée. La bride d'actionnement 57 ou le chariot d'accouplement 19, notamment la partie de chariot 38, peut en outre porter un roulement à billes 58 ou un galet de roulement venant en butée axiale contre le chariot d'accouplement 19 ou contre lequel la bride d'actionnement 57 vient en butée axiale. S'agissant du roulement à billes 58, l'une des cages radialement externe et interne est par exemple montée solidaire avec l'un des bride d'actionnement 57 et chariot d'accouplement 19, tandis que l'autre des cages radialement externe et interne, qui vient en butée axiale avec le chariot d'accouplement 19 ou contre laquelle la bride d'actionnement 57 vient butée, est libre en rotation par rapport à l'une des cages externe et interne. Le roulement à billes 58 peut être lubrifié à la graisse. S'agissant du galet de roulement, il est par exemple monté libre en rotation autour de l'un des bride d'actionnement 57 et chariot d'accouplement 19. Le roulement à billes 58 ou le galet de roulement permet de limiter les efforts de contact entre la partie mobile 55 de l'actionneur 54 et le chariot d'accouplement 19, lorsque la bride d'actionnement 57 vient en butée axiale contre le chariot d'accouplement 19 à l'issue de la translation de la partie mobile 55 jusqu'à la première position engagée et que la partie mobile 55 entraîne le chariot d'accouplement 19 en translation depuis la position accouplée vers la position désaccouplée.

La turbomachine 10 comprend aussi des organes de verrouillage 59, 60, l'un 59 porté par le rotor de machine électrique 24, l'autre 60 porté par le chariot d'accouplement 19, notamment par la partie de chariot 38. Les organes de verrouillage 59, 60 sont conçus pour s'engager l'un avec l'autre à l'issue du déplacement en translation du chariot d'accouplement 19 par rapport au rotor de machine électrique 24 depuis la position accouplée jusqu'à la position désaccouplée et pour bloquer le déplacement en translation du chariot d'accouplement 19 par rapport au rotor de machine électrique 24 depuis la position désaccouplée vers la position accouplée, lorsque le chariot d'accouplement 19 occupe la position désaccouplée. Lorsqu'ils sont engagés l'un avec l'autre, les organes de verrouillage 59, 60 contraignent ainsi l'organe de rappel élastique 31, qui tend au contraire à déplacer le chariot d'accouplement 19 vers la position accouplée. De cette manière, lorsque l'unité de commande commande l'actionneur 54 d'entraîner le chariot d'accouplement 19 vers la position désaccouplée, la partie mobile 55 se déplace depuis la première position désengagée jusqu'à la deuxième position engagée en entraînant le chariot d'accouplement 19 en translation jusqu'à la position désaccouplée où les organes de verrouillage 59, 60 s'engagent l'un avec l'autre pour empêcher le chariot d'accouplement 19 de se déplacer en sens inverse vers la position accouplée sous l'effet de l'organe de rappel élastique 31. Les organes de verrouillage 59, 60 permettent ainsi de suppléer ou, comme cela sera expliqué ci-après, de remplacer la contrainte appliquée par la partie mobile 55 de l'actionneur 54 sur l'organe de rappel élastique 31 en position désaccouplée du chariot d'accouplement 19.

Les organes de verrouillage 59, 60 comprennent par exemple un orifice et un pion de verrouillage apte à se déplacer, notamment en translation radiale, entre une première position et une deuxième position dans laquelle le pion de verrouillage s'étend à travers l'orifice, lorsque le chariot d'accouplement 19 occupe la position désaccouplée. Par exemple, le pion de verrouillage est rappelé élastiquement vers la deuxième position par un ressort, et une surface de came est conçue pour entraîner le pion de verrouillage en déplacement depuis la deuxième position vers la première position, lorsque le chariot d'accouplement 19 se déplace depuis la position accouplée vers la position désaccouplée, et pour relâcher le pion de verrouillage au niveau de l'orifice, lorsque le chariot d'accouplement 19 atteint la position désaccouplée. En variante, le déplacement du pion de verrouillage entre les première et deuxième positions est à commande électrique.

La partie mobile 55 peut encore être conçue pour se déplacer en translation par rapport à la partie fixe 56 depuis la deuxième position engagée vers une deuxième position désengagée dans laquelle la partie mobile 55 et le chariot d'accouplement 19 sont libres en mouvement l'un par rapport à l'autre, lorsque le chariot d'accouplement 19 est bloqué en position désaccouplée par les organes de verrouillage 59, 60. La partie mobile 55 se déplace depuis la deuxième position engagée vers la première position désengagée, dans un sens de translation opposé à celui de la première position engagée vers la deuxième position engagée, par exemple vers l'avant ou amont. De cette manière, la partie mobile 55 de l'actionneur 54 relâche le chariot d'accouplement 19 lorsqu'il est bloquée en position désaccouplée par les organes de verrouillage 59, 60.

La turbomachine 10 peut aussi comprendre une paroi de protection thermique 61 entourant la machine électrique 18. La paroi de protection thermique 61 est par exemple interposée entre la machine électrique 18 et un cône d'échappement 62 fixé à l'avant ou amont dudit cône d'échappement 62 au carter d'échappement 13.

La turbomachine 10 décrite ci-avant est particulièrement avantageuse car elle est capable d'adapter sa position axiale pour éviter un désaccouplement de l'arbre de turbine 17 et du rotor de machine électrique 24 en cas de déplacement axial de l'arbre de turbine 17, mais aussi de s'adapter à un désaxage entre l'arbre de turbine 17 et le rotor de machine électrique 24. Elle est outre avantageuse car elle prévoit un désaccouplement forcé de l'arbre de turbine 17 et du rotor de machine électrique 24, notamment en cas de panne de la machine électrique 18 ou du circuit électrique auquel elle est connectée.

## Revendications

1. Turbomachine (10) pour aéronef s'étendant suivant un axe longitudinal (11) de direction axiale et comprenant :
- un stator (16) fixe,
- un arbre de turbine (17) s'étendant suivant l'axe longitudinal (11) jusqu'à une extrémité arrière (20) de la turbomachine (10) et étant apte à tourner autour de l'axe longitudinal (11) par rapport au stator (16),
- une machine électrique (18) agencée en arrière de l'arbre de turbine (17) et comprenant un stator de machine électrique (22) fixé au stator (16) et un rotor de machine électrique (24) coaxial avec le stator de machine électrique (22) autour d'un axe de machine électrique (241) de direction axiale et apte à tourner par rapport au stator de machine électrique (22) autour dudit axe de machine électrique (241),
- un chariot d'accouplement (19) monté solidaire en rotation avec le rotor de machine électrique (24) autour de l'axe de machine électrique (241) et apte à se déplacer en translation par rapport au rotor de machine électrique (24) suivant la direction axiale entre une position accouplée et une position désaccouplée, et
- des organes d'accouplement (28, 29), l'un (28) porté par une extrémité arrière (30) de l'arbre de turbine (17), l'autre (29) porté par le chariot d'accouplement (19), les organes d'accouplement (28, 29) étant conçus pour s'engager l'un avec l'autre à l'issue du déplacement du chariot d'accouplement (19) depuis la position désaccouplée jusqu'à la position accouplée et pour transmettre un couple de l'arbre de turbine (17) au rotor de machine électrique (24) et/ou l'inverse, lorsque les organes d'accouplement (28, 29) sont engagés l'un avec l'autre,
la turbomachine (10) étant **caractérisée en ce qu'**elle comprend en outre un organe de rappel élastique (31) monté entre le chariot d'accouplement (19) et le rotor de machine électrique (24) et conçu pour rappeler élastiquement le chariot d'accouplement (19) en translation suivant la direction axiale vers la position accouplée,
la turbomachine comprenant un actionneur (54) conçu pour entraîner le chariot d'accouplement (19) en translation depuis la position accouplée vers la position désaccouplée, l'actionneur (54) comprenant une partie mobile (55) et une partie fixe (56) par rapport à laquelle la partie mobile (55) est apte à se déplacer en translation suivant la direction axiale, et dans laquelle la partie mobile (55) de l'actionneur (54) est conçue pour entraîner le chariot d'accouplement (19) en translation depuis la position accouplée vers la position désaccouplée, lorsque la partie mobile (55) se déplace elle-même en translation depuis une première position engagée vers une deuxième position engagée, et la partie mobile (55) de l'actionneur (54) étant conçue pour se déplacer en translation par rapport à la partie fixe (56) depuis une première position désengagée dans laquelle la partie mobile (55) et le chariot d'accouplement (19) sont libres en mouvement l'un par rapport à l'autre, vers la première position engagée, lorsque le chariot d'accouplement (19) occupe la position accouplée.

2. Turbomachine (10) selon la revendication 1, dans laquelle les organes d'accouplement (28, 29) sont des crabots.

3. Turbomachine (10) selon la revendication 1 ou la revendication 2, dans laquelle l'extrémité arrière (30) de l'arbre de turbine (17) porte l'un (28) des organes d'accouplement (28, 29) par l'intermédiaire d'un support (32) annulaire comprenant, successivement suivant la direction axiale, une première partie (33) montée solidaire en rotation avec l'arbre de turbine (17), une deuxième partie (34) portant ledit organe d'accouplement (28) et une troisième partie (35) souple reliant la première partie (33) à la deuxième partie (34) et étant apte à autoriser un déplacement de la première partie (33) par rapport à la deuxième partie (34) suivant les directions axiale et radiale.

4. Turbomachine (10) selon l'une des revendications 1 à 3, dans laquelle le chariot d'accouplement (19) comprend une partie de chariot (38) par l'intermédiaire de laquelle le chariot d'accouplement (19) est monté solidaire en rotation autour de l'axe de machine électrique (241) et libre en translation suivant la direction axiale avec le rotor de machine électrique (24), une partie d'accouplement (39) portant l'autre (29) des organes d'accouplement (28, 29) et une partie de liaison (40) reliant la partie de chariot (38) à la partie d'accouplement (39) et comprenant une première portion (41) qui s'étend axialement dans le prolongement de la partie d'accouplement (39) vers la partie de chariot (38) et qui forme une bride tronconique.

5. Turbomachine (10) selon l'une des revendications 1 à 4, comprenant une enceinte lubrifiée (44) dans laquelle sont logés des paliers (25, 26) supportant le rotor de machine électrique (24) et des premières cannelures (27) ménagées en correspondance dans le chariot d'accouplement (19) et dans le rotor de machine électrique (24) pour l'entraînement en rotation du chariot d'accouplement (19) par le rotor de machine électrique (24) et/ou l'inverse et pour le guidage en translation axiale du chariot d'accouplement (19) par rapport au rotor de machine électrique (24), et un circuit de lubrification (45) comprenant un injecteur (46) conçu pour injecter de l'huile dans l'enceinte lubrifiée (44).

6. Turbomachine (10) selon l'une des revendications 1 à 5, comprenant des organes de verrouillage (59, 60), l'un (59) porté par le rotor de machine électrique (24), l'autre (60) porté par le chariot d'accouplement (19), les organes de verrouillage (59, 60) étant conçus pour s'engager l'un avec l'autre à l'issue du déplacement en translation du chariot d'accouplement (19) par rapport au rotor de machine électrique (24) depuis la position accouplée jusqu'à la position désaccouplée et pour bloquer le déplacement en translation du chariot d'accouplement (19) par rapport au rotor de machine électrique (24) depuis la position désaccouplée vers la position accouplée, lorsque le chariot d'accouplement (19) occupe la position désaccouplée.

7. Turbomachine (10) selon la revendication 6, dans laquelle la partie mobile (55) de l'actionneur (54) est conçue pour se déplacer en translation par rapport à la partie fixe (56) depuis la deuxième position engagée vers une deuxième position désengagée dans laquelle la partie mobile (55) et le chariot d'accouplement (19) sont libres en mouvement l'un par rapport à l'autre, lorsque le chariot d'accouplement (19) est bloqué en position désaccouplée par les organes de verrouillage (59, 60).

## Patentansprüche

1. Turbomaschine (10) für Luftfahrzeuge, die sich entlang einer Längsachse (11) in axialer Richtung erstreckt und Folgendes umfasst:
- einen feststehenden Stator (16),
- eine Turbinenwelle (17), die sich entlang der Längsachse (11) bis zu einem hinteren Ende (20) der Turbomaschine (10) erstreckt und sich um die Längsachse (11) relativ zum Stator (16) drehen kann,
- eine Elektromaschine (18), die hinter der Turbinenwelle (17) angeordnet ist und einen an dem Stator (16) befestigten Elektromaschinenstator (22) und einen Elektromaschinenrotor (24) umfasst, der in axialer Richtung koaxial zum Elektromaschinenstator (22) um eine Elektromaschinenachse (241) angeordnet ist und sich relativ zum Elektromaschinenstator (22) um die Elektromaschinenachse (241) drehen kann,
- einen Kupplungsschlitten (19), der drehfest mit dem Elektromaschinenrotor (24) um die Elektromaschinenachse (241) montiert ist und sich in Translation relativ zum Elektromaschinenrotor (24) in axialer Richtung zwischen einer gekoppelten und einer entkoppelten Position bewegen kann, und
- Kupplungselemente (28, 29), wobei eines (28) von einem hinteren Ende (30) der Turbinenwelle (17) getragen wird, das andere (29) vom Kupplungsschlitten (19) getragen wird, wobei die Kupplungselemente (28, 29) so ausgelegt sind, dass sie nach dem Bewegen des Kupplungsschlittens (19) von der entkoppelten Position in die gekoppelte Position ineinandergreifen und ein Drehmoment von der Turbinenwelle (17) an den Elektromaschinenrotor (24) und/oder umgekehrt übertragen, wenn die Kupplungselemente (28, 29) miteinander in Eingriff stehen,
wobei die Turbomaschine (10) **dadurch gekennzeichnet ist, dass** sie ferner ein elastisches Rückstellorgan (31) umfasst, das zwischen dem Kupplungsschlitten (19) und dem Elektromaschinenrotor (24) montiert ist und so ausgelegt ist, den Kupplungsschlitten (19) bei einer Translation entlang der axialen Richtung in die gekoppelte Position elastisch vorzuspannen,
wobei die Turbomaschine einen Aktuator (54) umfasst, der so ausgelegt ist, dass er den Kupplungsschlitten (19) von der gekoppelten Position in die entkoppelte Position in Translation antreibt, wobei der Aktuator (54) einen beweglichen Teil (55) und einen festen Teil (56) umfasst, gegenüber dem sich der bewegliche Teil (55) in axialer Richtung in Translation bewegen kann, und wobei der bewegliche Teil (55) des Aktuators (54) so ausgelegt ist, dass er den Kupplungsschlitten (19) von der gekoppelten Position in die entkoppelte Position in Translation antreibt, wenn sich der bewegliche Teil (55) selbst in Translation von einer ersten eingerückten Position in eine zweite eingerückte Position bewegt, und der bewegliche Teil (55) des Aktuators (54) so ausgelegt ist, dass er sich in Translation gegenüber dem festen Teil (56) von einer ersten ausgerückten Position aus, in der der bewegliche Teil (55) und der Kupplungsschlitten (19) frei in Bewegung zueinander sind, in die erste eingerückte Position bewegt, wenn der Kupplungsschlitten (19) die gekoppelte Position einnimmt.

2. Turbomaschine (10) nach Anspruch 1, wobei die Kupplungselemente (28, 29) Klauen sind.

3. Turbomaschine (10) nach Anspruch 1 oder 2, bei der das hintere Ende (30) der Turbinenwelle (17) eines (28) der Kupplungsorgane (28, 29) über einen ringförmigen Träger (32) trägt, der nacheinander in axialer Richtung einen ersten Teil (33) umfasst, der drehfest mit der Turbinenwelle (17) montiert ist, einen zweiten Teil (34), der das Kupplungsorgan (28) trägt, und einen dritten flexiblen Teil (35), der den ersten Teil (33) mit dem zweiten Teil (34) verbindet und geeignet ist, eine Verschiebung des ersten Teils (33) in Bezug auf den zweiten Teil (34) in axialer und radialer Richtung zuzulassen.

4. Turbomaschine (10) nach einem der Ansprüche 1 bis 3, wobei der Kupplungsschlitten (19) einen Schlittenteil (38), über den der Kupplungsschlitten (19) drehfest um die Elektromaschinenachse (241) montiert und in axialer Richtung mit dem Elektromaschinenrotor (24) frei verschiebbar ist, einen Kupplungsteil (39), der das andere (29) der Kupplungsorgane (28, 29) trägt, und einen Verbindungsteil (40) umfasst, der den Schlittenteil (38) mit dem Kupplungsteil (39) verbindet und einen ersten Abschnitt (41) umfasst, der sich axial in Verlängerung des Kupplungsteils (39) zum Schlittenteil (38) erstreckt und einen kegelstumpfförmigen Flansch bildet.

5. Turbomaschine (10) nach einem der Ansprüche 1 bis 4, umfassend ein geschmiertes Gehäuse (44), in dem Lager (25, 26) untergebracht sind, die den Elektromaschinenrotor (24) tragen, und erste Rillen (27), die korrespondierend im Kupplungsschlitten (19) und im Elektromaschinenrotor (24) vorgesehen sind, um den Kupplungsschlitten (19) durch den Elektromaschinenrotor (24) und/oder umgekehrt in Drehung anzutreiben und den Kupplungsschlitten (19) in Bezug auf den Elektromaschinenrotor (24) in Translation axial zu führen, und einen Schmierkreislauf (45), der einen Injektor (46) umfasst, der so ausgelegt ist, dass er Öl in das geschmierte Gehäuse (44) einspritzt.

6. Turbomaschine (10) nach einem der Ansprüche 1 bis 5, umfassend Verriegelungselemente (59, 60), von denen eines (59) von dem Elektromaschinenrotor (24) getragen wird und das andere (60) vom Kupplungsschlitten (19) getragen wird, wobei die Verriegelungselemente (59, 60) so ausgelegt sind, dass sie nach Abschluss der Translationsbewegung des Kupplungsschlittens (19) in Bezug auf den Elektromaschinenrotor (24) von der gekoppelten Position in die entkoppelte Position ineinandergreifen und die Translationsbewegung des Kupplungsschlittens (19) gegenüber dem Elektromaschinenrotor (24) von der entkoppelten Position in die gekoppelte Position blockieren, wenn der Kupplungsschlitten (19) die entkoppelte Position einnimmt.

7. Turbomaschine (10) nach Anspruch 6, wobei der bewegliche Teil (55) des Aktuators (54) so ausgelegt ist, dass er sich in Translation gegenüber dem festen Teil (56) von der zweiten eingerückten Position in eine zweite ausgerückte Position bewegt, in der der bewegliche Teil (55) und der Kupplungsschlitten (19) frei in Bewegung zueinander sind, wenn der Kupplungsschlitten (19) durch die Verriegelungselemente (59, 60) in der entkoppelten Position blockiert ist.

## Claims

1. Aircraft turbomachine (10) extending along a longitudinal axis (11) of axial direction and comprising:
- a fixed stator (16),
- a turbine shaft (17) extending along the longitudinal axis (11) up to a rear end (20) of the turbomachine (10) and being capable of rotating about the longitudinal axis (11) relative to the stator (16),
- an electric machine (18) arranged at the rear of the turbine shaft (17) and comprising an electric machine stator (22) attached to the stator (16) and an electric machine rotor (24) coaxial with the electric machine stator (22) about an electric machine axis (241) of axial direction and capable of rotating relative to the electric machine stator (22) about said electric machine axis (241),
- a coupling carriage (19) mounted rotationally fixed with the electric machine rotor (24) about the electric machine axis (241) and capable of moving in translation relative to the electric machine rotor (24) in the axial direction between a coupled position and an uncoupled position, and
- coupling members (28, 29), one (28) carried by a rear end (30) of the turbine shaft (17), the other (29) carried by the coupling carriage (19), the coupling members (28, 29) being designed to engage with one another after the coupling carriage (19) has moved from the uncoupled position to the coupled position and to transmit a torque from the turbine shaft (17) to the electric machine rotor (24) and/or vice versa, when the coupling members (28, 29) are engaged with one another,
the turbomachine (10) being **characterised in that** it further comprises an elastic return member (31) mounted between the coupling carriage (19) and the electric machine rotor (24) and designed to elastically return the coupling carriage (19) in translation in the axial direction to the coupled position,
the turbomachine comprising an actuator (54) designed to drive the coupling carriage (19) in translation from the coupled position to the uncoupled position, the actuator (54) comprising a movable part (55) and a fixed part (56) relative to which the movable part (55) is capable of moving in translation in the axial direction, and wherein the movable part (55) of the actuator (54) is designed to drive the coupling carriage (19) in translation from the coupled position to the uncoupled position, when the movable part (55) itself moves in translation from a first engaged position to a second engaged position, and the movable part (55) of the actuator (54) being designed to move in translation relative to the fixed part (56) from a first disengaged position wherein the movable part (55) and the coupling carriage (19) are free to move relative to one another, to the first engaged position, when the coupling carriage (19) occupies the coupled position.

2. Turbomachine (10) according to claim 1, wherein the coupling members (28, 29) are dogs.

3. Turbomachine (10) according to claim 1 or claim 2, wherein the rear end (30) of the turbine shaft (17) carries one (28) of the coupling members (28, 29) by means of an annular support (32) comprising, successively in the axial direction, a first part (33) mounted rotationally fixed with the turbine shaft (17), a second part (34) carrying said coupling member (28) and a third flexible part (35) connecting the first part (33) to the second part (34) and being capable of allowing a movement of the first part (33) relative to the second part (34) in the axial and radial directions.

4. Turbomachine (10) according to one of claims 1 to 3, wherein the coupling carriage (19) comprises a carriage part (38) by means of which the coupling carriage (19) is mounted rotationally fixed about the electric machine axis (241) and free in translation in the axial direction with the electric machine rotor (24), a coupling part (39) carrying the other (29) of the coupling members (28, 29) and a connecting part (40) connecting the carriage part (38) to the coupling part (39) and comprising a first portion (41) that extends axially in the extension of the coupling part (39) towards the carriage part (38) and that forms a tapered flange.

5. Turbomachine (10) according to one of claims 1 to 4, comprising a lubricated enclosure (44) wherein are housed the bearings (25, 26) supporting the electric machine rotor (24) and first splines (27) arranged in correspondence in the coupling carriage (19) and in the electric machine rotor (24) to drive in rotation the coupling carriage (19) by the electric machine rotor (24) and/or vice versa and to guide in axial translation the coupling carriage (19) relative to the electric machine rotor (24), and a lubrication circuit (45) comprising an injector (46) designed to inject oil into the lubricated enclosure (44).

6. Turbomachine (10) according to one of claims 1 to 5, comprising locking members (59, 60),one (59) carried by the electric machine rotor (24), the other (60) carried by the coupling carriage (19), the locking members (59, 60) being designed to engage with one another after the coupling carriage (19) has moved in translation relative to the electric machine rotor (24) from the coupled position to the uncoupled position and to lock the translational movement of the coupling carriage (19) relative to the electric machine rotor (24) from the uncoupled position to the coupled position, when the coupling carriage (19) occupies the uncoupled position.

7. Turbomachine (10) according to claim 6, wherein the movable part (55) of the actuator (54) is designed to move in translation relative to the fixed part (56) from the second engaged position to a second disengaged position wherein the movable part (55) and the coupling carriage (19) are free to move relative to one another, when the coupling carriage (19) is locked in uncoupled position by the locking members (59, 60).
